# EUROPÄISCHE PATENTSCHRIFT

(11) **EP 2 614 229 B1**
(45) Veröffentlichungstag und Bekanntmachung des Hinweises auf die Patenterteilung: **25.02.2015**
(21) Anmeldenummer: 11732373.3
(22) Anmeldetag: 29.06.2011
(51) Int. Cl.: F01N 3/20

(54) **REDUKTIONSMITTELDOSIERSYSTEM ZUR EINDÜSUNG EINES REDUKTIONSMITTELS IN DEN ABGASSTROM EINES VERBRENNUNGSMOTORS**
REDUCING AGENT DOSING SYSTEM FOR INJECTING A REDUCING AGENT INTO THE EXHAUST-GAS FLOW OF AN INTERNAL COMBUSTION ENGINE
SYSTÈME DE DOSAGE D'AGENT RÉDUCTEUR POUR INJECTION D'UN AGENT RÉDUCTEUR DANS LE FLUX DE GAZ D'ÉCHAPPEMENT D'UN MOTEUR À COMBUSTION INTERNE

(30) Priorität: 06.09.2010 DE 102010044468
(43) Veröffentlichungstag der Anmeldung: 17.07.2013
(73) Patentinhaber: Albonair GmbH, 44263 Dortmund (DE)
(72) Erfinder: KASSEL, Armin, 58119 Hagen (DE); OVERHOFF, Werner, 45772 Marl (DE)
(74) Vertreter: Patentanwaltskanzlei Methling
(86) Internationale Anmeldenummer: PCT/EP2011/003196
(87) Internationale Veröffentlichungsnummer: WO 2012/031642

(56) Entgegenhaltungen:
- EP-A1- 1 195 500
- EP-A1- 1 676 988
- US-A1- 2010 115 932

## Beschreibung

Die Erfindung betrifft ein Reduktionsmitteldosiersystem zur Eindüsung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Reduktionsmittelpumpe gefördert wird, wobei eine Druckluftversorgung besteht und zumindest eine Düse angeordnet ist, die mit der Druckleitung der Reduktionsmittelpumpe verbunden ist und über die das Reduktionsmittel in den Abgasstrom eingebracht und mittels Druckluft zerstäubt wird, wobei die Druckleitung der Reduktionsmittelpumpe über einen Zugang in ein Ventil mündet, welches bei Druckbeaufschlagung mittels durch die Reduktionsmittelpumpe geförderten Reduktionsmittels den Zugang zu dem Ventil und einen Überströmkanal zu einem Ausgang des Ventils zu einer Dosierleitung zu der Düse freigibt.

Ein derartiges Reduktionsmitteldosiersystem ist aus der EP 1 676 988 A1 bekannt.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil gemäß DIN 70070, das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Zur Förderung des Reduktionsmittels dient dabei eine Membranpumpe oder eine Kolbenpumpe. Nachteilig ist dabei, dass die verwendete Pumpe ihr Hubvolumen während des Fördertakts in einer sehr kurzen Zeitspanne von ca. 5 msec in Richtung auf die Düse fördert. In diesem Zeitabschnitt kommt es zu einem Förderpuls, der eine hohe Strömungsgeschwindigkeit des Reduktionsmittels mit sich bringt. Während bzw. nach Beendigung des Pumpenhubs zieht das in der Dosierleitung fließende Reduktionsmittel weiteres Reduktionsmittel durch die Pumpenventile. Hierdurch wird eine ungewollte und somit unbekannte zusätzliche Dosiermenge in den Abgasstrom ausgebracht.

Ein weiterer Nachteil ist, dass die Pumpenpulsationen einer Membranpumpe oder Kolbenpumpe eine diskontinuierliche Beladung der Zerstäuberdüse mit dem Reduktionsmittel erzeugen. Dieser Effekt kann bereits bei kleinen Fördermengen eine Überladung der Düse hervorrufen.

Die Aufgabe der Erfindung ist es, ein Reduktionsmitteldosiersystem der eingangs genannten Art derart weiter zu bilden, dass unerwünscht hohe Strömungsgeschwindigkeiten des geförderten Reduktionsmittels und eine unkontrollierte Reduktionsmittelförderung vermieden werden und somit einer Überladung der Düse infolge eines Förderhubs der verwendeten Förderpumpe vorgebeugt wird.

Diese Aufgabe wird erfindungsgemäß durch ein Reduktionsmitteldosiersystem gemäß Anspruch 1 gelöst. Vorteilhafte Weiterbildungen der Erfindung sind in den jeweiligen abhängigen Ansprüchen angegeben.

Die Begriffe Reduktionsmitteldosiersystem bzw. Dosiersystem werden im Sinne dieser Beschreibung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Besonders vorteilhaft bei dem Reduktionsmitteldosiersystem zur Eindüsung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Reduktionsmittelpumpe gefördert wird, wobei eine Druckluftversorgung besteht ist und zumindest eine Düse angeordnet ist, die mit der Druckleitung der Reduktionsmittelpumpe verbunden ist und über die das Reduktionsmittel in den Abgasstrom eingebracht und mittels Druckluft zerstäubt wird, ist es, dass die Druckleitung der Reduktionsmittelpumpe über einen Zugang in ein Ventil mündet, welches bei Druckbeaufschlagung mittels durch die Reduktionsmittelpumpe geförderten Reduktionsmittels den Zugang zu dem Ventil und einen Überströmkanal zu einem Ausgang des Ventils zu einer Dosierleitung zu der Düse freigibt.

Erfindungsgemäß ist somit in der Druckleitung zwischen der Reduktionsmittelpumpe und der Düse ein Ventil angeordnet, welches bei Druckbeaufschlagung mittels durch die Reduktionsmittelpumpe geförderten Reduktionsmittels den Zugang zu dem Ventil und einen Überströmkanal zu dem Ausgang des Ventils in Richtung auf die Düse freigibt.

Durch die Anordnung und entsprechende Auswahl des Ventils kann somit der zum Betrieb der Pumpe gewünschte Gegendruck gemäß einer Vorgabe des Pumpenherstellers erzeugt werden. Der Kern der Erfindung besteht somit in der Anordnung eines aktiven Ventils in der Druckleitung des Dosiersystems.

In einer bevorzugten Ausführungsform schließen der Zugang und der Ausgang des Ventils automatisch, wenn keine Druckbeaufschlagung mittels durch die Reduktionsmittelpumpe geförderten Reduktionsmittels erfolgt.

Hierdurch wird eine mögliche, aber ungewünschte Überförderung durch eine ventilgesteuerte Pumpe unterbunden, da auch der Ausgang des Ventils automatisch schließt, wenn keine Druckbeaufschlagung mittels durch die Reduktionsmittelpumpe geförderten Reduktionsmittels erfolgt, d.h. wenn der Pumpenhub abgeschlossen ist.

Dabei weist das Ventil eine Membran auf, die unter Druckbeaufschlagung mittels des durch die Reduktionsmittelpumpe geförderten Reduktionsmittels den Überströmkanal vom Zugang zum Ausgang des Ventils freigibt.

Eine derartige flexible Membran ist geeignet, den Überströmkanal selbsttätig bei Anliegen eines entsprechenden Förderdrucks freizugeben und am Ende des Pumpenhubs, wenn der Förderdruck entsprechend absinkt, wieder zu verschließen durch den Rückgang in die Ausgangslage der reversiblen Auslenkung der Membran.

Ferner ist die dem Zugang und dem Ausgang abgewandte Rückseite der Membran mittels Druckluft der Druckluftversorgung beaufschlagt.

Durch diese Maßnahme kann der gewünschte Pumpengegendruck, gegen den die Reduktionsmittelpumpe fördert, auf den gewünschten Wert eingestellt werden, d.h. dass die Reduktionsmittelpumpe durch die Druckbeaufschlagung der Membran gegen einen definierten Gegendruck fördert.

Vorzugsweise verschließt die Membran bei einem Unterdruck auf der Ausgangsseite des Ventils den Ausgang aus dem Ventil sowie den Überströmkanal des Ventils.

Hierdurch wird eine etwaige unerwünschte Überförderung an Reduktionsmittel wirksam unterbunden.

Vorzugsweise ist ein Schaltventil angeordnet, mittels dessen die Druckluftbeaufschlagung der Rückseite der Membran abschaltbar ist, sodass durch ein Abschalten der Druckluftbeaufschlagung der Membran die Reduktionsmittelpumpe gegen einen verminderten Gegendruck fördert und hierdurch leichter ansaugt und sich somit besser entlüften kann.

Vorzugsweise weist die Druckluftversorgung ein Druckregelventil auf.

Hierdurch kann die Druckluft auf ein zur Beaufschlagung der Membranrückseite und/oder zur Zerstäubung des Reduktionsmittels mittels Druckluft gewünschtes Druckniveau eingestellt werden. Die Druckluft selbst kann dann aus einem vorgesehenen bordeigenen Druckluftsystem beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann.

Vorzugsweise handelt es sich bei der Reduktionsmittelpumpe um eine Membranpumpe oder eine Kolbenpumpe.

Bei einer besonders bevorzugten Ausführungsform des Dosiersystems bildet das Ventil in der Druckleitung das druckseitige Auslassventil der Reduktionsmittelpumpe. Ein zusätzliches anzusteuerndes Pumpenauslassventil kann bei dieser besonders vorteilhaften Ausführungsform somit entfallen.

Besonders bevorzugt weist die Reduktionsmittelpumpe ein Auslassventil auf, welches bei Druckbeaufschlagung mittels durch die Reduktionsmittelpumpe geförderten Reduktionsmittels den Pumpenauslass freigibt und automatisch schließt, wenn keine Druckbeaufschlagung mittels durch die Reduktionsmittelpumpe geförderten Reduktionsmittels erfolgt. Dabei kann dieses druckseitige Auslassventil der Reduktionsmittelpumpe insbesondere durch das Ventil in der Druckleitung gebildet sein.

Vorzugsweise weist die Reduktionsmittelpumpe ein Auslassventil auf, welches durch eine Membran gebildet ist.

Das druckseitige Auslassventil der Reduktionsmittelpumpe kann somit selbst durch eine flexible Membran gebildet sein und hierdurch ein automatisches Öffnen des druckseitigen Pumpenauslasses bei einem Förderhub bewirken, sowie ein automatisches Verschließen des Pumpenauslasses nach Beendigung des Förderhubs.

Ein derartiges selbsttätiges, durch eine Membran gebildetes Auslassventil kann somit kumulativ zu dem Ventil in der Druckleitung des Dosiersystems angeordnet sein. Alternativ kann auch das erfindungsgemäß in der Druckleitung vorgesehene Ventil gleichzeitig das druckseitige Auslassventil der Pumpe bilden.

Ein Ausführungsbeispiel der Erfindung ist in der Figur dargestellt und wird nachfolgend näher erläutert. Es zeigt:

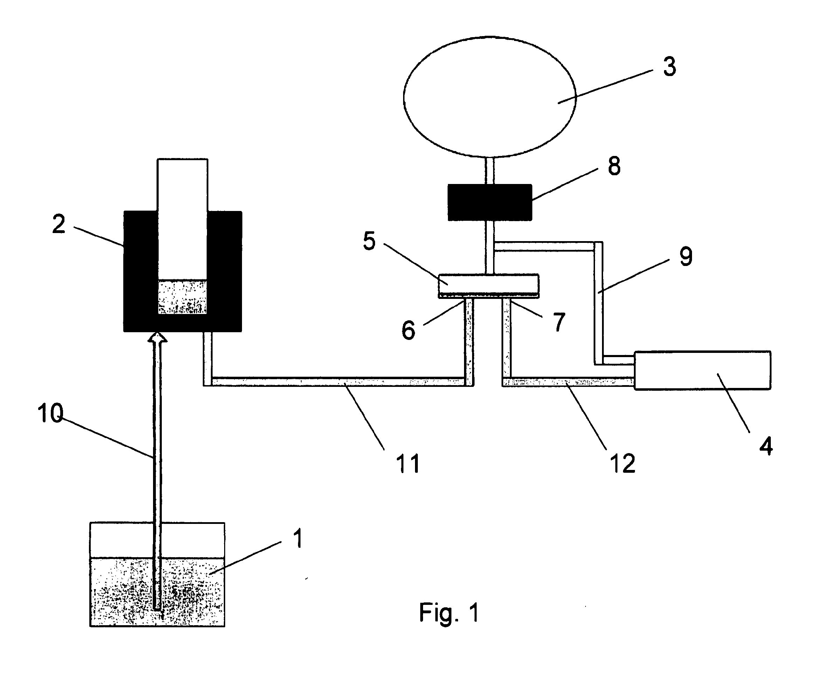

- Figur 1:: Ein Funktionsschema einer Ausführungsform eines erfindungsgemäßen Reduktionsmitteldosiersystems.

In der Figur 1 ist dargestellt ein Schema eines erfindungsgemäßen Reduktionsmitteldosiersystems zur Eindüsung eines Reduktionsmittels in den Abgasstrom eines Verbrennungsmotors zur selektiven katalytischen Reduktion. Dabei wird Reduktionsmittel, wie beispielsweise Harnstofflösung, insbesondere gemäß DIN 70070, aus einem Tank 1 entnommen und mittels der Förderpumpe 2 gefördert. Bei der Förderpumpe 2 handelt es sich in dem in Figur 1 dargestellten Ausführungsbeispiel um eine Kolbenpumpe.

Mit jedem Hub der Kolbenpumpe 2 wird über die Saugleitung 10 Reduktionsmittel aus dem Tank 1 entnommen und sodann über die Druckleitung 11 weiter zu einer Zerstäuberdüse 4 gefördert.

Bei der Zerstäuberdüse 4 handelt es sich um eine Zweistoffdüse, bei der mittels Druckluft das Reduktionsmittel zerstäubt wird. Die Aerosolbildung erfolgt somit außerhalb des Düsenkörpers. Die Erfindung ist jedoch nicht hierauf beschränkt.

Zur Bereitstellung der zur Zerstäubung benötigten Druckluft ist ein Druckluftsystem 3 vorgesehen, welches über ein Druckregelventil 8 verfügt, um den Luftdruck auf den für eine optimale Aerosolbildung erforderlichen Druck zu regeln.

Die Druckleitung 11 der Kolbenpumpe 2 mündet über den Zugang 6 in den Ventilkörper 5.

Erfindungsgemäß ist somit die Anordnung eines aktiven Ventils 5 auf der Druckseite der Förderpumpe 2 in dem Dosiersystem vorgesehen.

Das Ventil 5 wird gebildet aus einer Membran, welche den Zugang 6 zu dem Ventil 5 sowie den Ausgang 7 zu der Dosierleitung 12 verschließt. Das heißt, im Ruhezustand sind die Zugangsbohrung 6 und die Ausgangsbohrung 7 des Ventilkörpers 5 durch die Membran verschlossen.

Über die Dosierleitung 12 hinter dem Ventil 5 erfolgt die Zuleitung des geförderten Reduktionsmittels zu der Düse 4.

Während eines Förderhubs der Kolbenpumpe 2 befördert die Pumpe 2 nunmehr Reduktionsmittel über die Druckleitung 11 zur Zugangsbohrung 6. Dies bewirkt ein Abheben der Membran von der Zugangsbohrung 6 und gleichzeitig von der Ausgangsbohrung 7, sodass der Überströmkanal in dem Ventilkörper 5 freigegeben wird. Nun kann das Reduktionsmittel zur Dosierleitung 12 hin aus dem Ventilkörper 5 austreten, da sowohl die Zugangsbohrung 6 als auch die Ausgangsbohrung 7 sowie der sich dann ausbildende Überströmkanal innerhalb des Ventilkörpers 5 durch die Membran freigegeben ist.

Die Rückseite der Membran in dem Ventilkörper 5 ist mit Druckluft beaufschlagt. Hierzu wird die Druckluft des in dem Dosiersystem vorgesehenen Druckluftsystems 3 verwendet. Dabei kann es sich um ein bordeigenes Druckluftsystem eines Nutzfahrzeuges handeln, oder aber es kann ein Druckluftkompressor und ein Druckluftkessel oder Druckluftspeicher vorgesehen sein.

Der Druck der Druckluft aus dem Druckluftsystem 3 wird mittels des Druckregelventils 8 auf den gewünschten Luftdruck eingeregelt.

Nach dem Pumpenstoß der Kolbenpumpe 2 wird die Membran in dem Ventilkörper 5 durch den Sog des noch in der Dosierleitung 12 fließenden Reduktionsmittels angezogen und verschließt so selbsttätig und automatisch die Austrittsöffnung 7. Eine Überdosierung wird durch diese Funktionsweise des Ventils 5 automatisch verhindert. Unterstützt wird das Schließen der Austrittsöffnung 7 auch durch den Luftdruck, der auf der anderen Seite der Membran in dem Ventilkörper 5 anliegt. Herangezogen wird hier über einen Abzweig die Druckluft, deren Luftdruck mittels des Druckregelventils 8 auf den zur Zerstäubung des Reduktionsmittels gewünschten Druck geregelt wird.

Darüber hinaus erfährt die Pumpe 2 einen Gegendruck, der das Schließverhalten der Pumpenventile verbessert, welches ebenfalls die Dosiergenauigkeit verbessert.

Zum besseren Ansaugverhalten der Pumpe 2 kann die Luftdruckregelung abgeschaltet werden. Somit erfährt die Pumpe 2 durch die Membran des Ventilkörpers 5 keinen Gegendruck und kann frei dosieren bzw. entlüften. Ferner wird durch die Verwendung des Ventils 5 der Pumpenstoß zeitlich gemittelt und die Fördermenge wird kontinuierlicher zur Düse 4 geleitet.

Im Moment der Förderung, d.h. in dem Moment, in dem die Membran des Ventils abgehoben und die Zugangsbohrung 6 und die Ausgangsbohrung 7 freigegeben sind, erfolgt eine Förderung des Reduktionsmittels über die Dosierleitung 12 zur Zerstäuberdüse 4.

Bei der Zerstäuberdüse 4 handelt es sich um eine Zweistoffdüse, bei der über die Luftdruckleitung 9 Druckluft aus dem Druckluftsystem 3 zugeführt und zur Aerosolbildung verwendet wird, in dem mittels der Druckluft die über die Dosierleitung 12 zugeführte Reduktionsmittelmenge zerstäubt wird.

Hierzu wird der gewünschte Luftdruck mittels des Druckregelventils 8 eingestellt.

Der Kern der Erfindung besteht somit in der Anordnung des Ventils 5 mit einer flexiblen Membran, die einerseits eine zeitliche Mittelung des Pumpenstoßes bewirkt und ferner durch den Sog des in der Dosierleitung 12 abfließenden Dosiermittels die Ausgangsbohrung 7 des Ventils 5 automatisch verschließt. Hierdurch wird eine Überförderung von ventilgesteuerten Pumpen verringert.

Ferner ist der Betrieb einer ventilgesteuerten Pumpe 2 in einem günstigen Betriebspunkt mit entsprechendem Gegendruck möglich. Es ergibt sich durch die erfindungsgemäße Anordnung eine erhöhte Wiederholgenauigkeit der Fördermenge.

Ein weiterer Vorteil besteht darin, dass die Dosiergenauigkeit unabhängiger von der verwendeten Düse 4 sowie der Position des Tanks 1, von Dosierleitungsparametern und vom geometrischen Design wie der Anordnung der Komponenten wird. Es ist möglich, an der Düse 4 einen hohen Luftdruck zur Zerstäubung des Reduktionsmittels vorzusehen, ohne dass diese das Reduktionsmittel selbstständig ansaugt. Drosseln oder Rückschlagventile in der Dosierstrecke können entfallen. Derartige Einbauten würden ggf. Betriebsunsicherheiten mit sich bringen, die durch die erfindungsgemäße Lösung vermieden werden.

Es stellt sich somit ein optimiertes Spraybild der luftunterstützten Düse 4 ein und es wird eine maximale Zerstäuberleistung der Düse 4 erreicht.

## Patentansprüche

1. Reduktionsmitteldosiersystem zur Eindüsung eines Reduktionsmittels in den Abgasstrom eines Verbrennungsmotors zur selektiven katalytischen Reduktion, wobei das Dosiersystem mit einem Reduktionsmitteltank (1) verbunden ist, aus dem Reduktionsmittel entnommen und mittels einer Reduktionsmittelpumpe (2) gefördert wird, wobei eine Druckluftversorgung (3) besteht und zumindest eine Düse (4) angeordnet ist, die mit der Druckleitung (11) der Reduktionsmittelpumpe (2) verbunden ist und über die das Reduktionsmittel in den Abgasstrom eingebracht und mittels Druckluft zerstäubt wird, wobei die Druckleitung (11) der Reduktionsmittelpumpe (2) über einen Zugang (6) in ein Ventil (5) mündet, welches bei Druckbeaufschlagung mittels durch die Reduktionsmittelpumpe (2) geförderten Reduktionsmittels den Zugang (6) zu dem Ventil (5) und einen Überströmkanal zu einem Ausgang (7) des Ventils zu einer Dosierleitung (12) zu der Düse (4) freigibt, **dadurch gekennzeichnet, dass** das Ventil (5) eine Membran aufweist, die unter Druckbeaufschlagung mittels des durch die Reduktionsmittelpumpe (2) geförderten Reduktionsmittels den Überströmkanal vom Zugang (6) zum Ausgang (7) des Ventils freigibt und die dem Zugang (6) und dem Ausgang (7) abgewandte Rückseite der Membran mittels Druckluft der Druckluftversorgung (3) beaufschlagt ist, sodass die Reduktionsmittelpumpe (2) durch die Druckbeaufschlagung der Membran gegen einen definierten Gegendruck fördert.

2. Dosiersystem nach Anspruch 1, **dadurch gekennzeichnet, dass** der Zugang (6) und der Ausgang (7) des Ventils (5) automatisch schließen, wenn keine Druckbeaufschlagung mittels durch die Reduktionsmittelpumpe (2) geförderten Reduktionsmittels erfolgt.

3. Dosiersystem nach Anspruch 1 oder 2, **dadurch gekennzeichnet, dass** die Membran bei einem Unterdruck auf der Ausgangsseite des Ventils den Ausgang (7) des Ventils (5) sowie den Überströmkanal des Ventils (5) verschließt.

4. Dosiersystem nach einem der vorherigen Ansprüche, **dadurch gekennzeichnet, dass** die Druckluftbeaufschlagung der Rückseite der Membran mittels eines Schaltventils abschaltbar ist, sodass durch ein Abschalten der Druckluftbeaufschlagung die Reduktionsmittelpumpe (2) gegen einen verminderten Gegendruck fördert und hierdurch leichter ansaugt.

5. Dosiersystem nach einem der vorherigen Ansprüche, **dadurch gekennzeichnet, dass** die Druckluftversorgung (3) ein Druckregelventil (8) aufweist.

6. Dosiersystem nach einem der vorherigen Ansprüche, **dadurch gekennzeichnet, dass** es sich bei der Reduktionsmittelpumpe (2) um eine Membranpumpe oder eine Kolbenpumpe handelt.

7. Dosiersystem nach einem der vorherigen Ansprüche, **dadurch gekennzeichnet, dass** das Ventil (5) in der Druckleitung (11) das druckseitige Auslassventil der Reduktionsmittelpumpe (2) bildet.

8. Dosiersystem nach einem der vorherigen Ansprüche, **dadurch gekennzeichnet, dass** die Reduktionsmittelpumpe (2) ein Auslassventil aufweist, welches bei Druckbeaufschlagung mittels durch die Reduktionsmittelpumpe (2) geförderten Reduktionsmittels den Pumpenauslass freigibt und automatisch schließt, wenn keine Druckbeaufschlagung mittels durch die Reduktionsmittelpumpe (2) geförderten Reduktionsmittels erfolgt, insbesondere dass das druckseitige Auslassventil der Reduktionsmittelpumpe (2) durch das Ventil (5) in der Druckleitung (11) gebildet ist.

9. Dosiersystem nach einem der vorherigen Ansprüche, **dadurch gekennzeichnet, dass** die Reduktionsmittelpumpe (2) ein Auslassventil aufweist, welches durch eine Membran gebildet ist.

## Claims

1. Reducing agent metering system for injecting a reducing agent into the exhaust-gas flow of an internal combustion engine for selective catalytic reduction, the metering system being connected to a reducing agent tank (1) from which reducing agent is extracted and delivered by means of a reducing agent pump (2), a compressed air supply (3) being provided and at least one nozzle (4) being arranged which is connected to the pressure line (11) of the reducing agent pump (2) and via which the reducing agent is introduced into the exhaust-gas flow and atomised by means of compressed air, the pressure line (11) of the reducing agent pump (2) opening via an inlet (6) into a valve (5) which, when pressure is applied thereto by reducing agent delivered by the reducing agent pump (2), releases the inlet (6) to the valve (5) and releases an overflow duct to an outlet (7) of the valve to a metering line (12) to the nozzle (4), **characterised in that** the valve (5) has a diaphragm which, when pressure is applied thereto by reducing agent delivered by the reducing agent pump (2), releases the overflow duct from the inlet (6) to the outlet (7) of the valve, and the reverse side of the diaphragm that faces away from the inlet (6) and the outlet (7) is acted upon by compressed air from the compressed air supply (3), so that the reducing agent pump (2) delivers against a defined counter-pressure owing to the application of pressure on the diaphragm.

2. Metering system according to claim 1, **characterised in that** the inlet (6) and the outlet (7) of the valve (5) automatically close when there is no application of pressure by reducing agent delivered by the reducing agent pump (2).

3. Metering system according to either claim 1 or claim 2, **characterised in that**, when there is a vacuum on the outlet side of the valve, the diaphragm closes the outlet (7) of the valve (5) and the overflow duct of the valve (5).

4. Metering system according to any of the preceding claims, **characterised in that** the application of pressure on the rear side of the diaphragm by compressed air can be switched off by means of a switching valve, so that, by switching off the application of pressure by compressed air, the reducing agent pump (2) delivers against a reduced counter-pressure and thus sucks in more easily.

5. Metering system according to any of the preceding claims, **characterised in that** the compressed air supply (3) has a pressure control valve (8).

6. Metering system according to any of the preceding claims, **characterised in that** the reducing agent pump (2) is a diaphragm pump or a piston pump.

7. Metering system according to any of the preceding claims, **characterised in that** the valve (5) in the pressure line (11) forms the pressure-side outlet valve of the reducing agent pump (2).

8. Metering system according to any of the preceding claims, **characterised in that** the reducing agent pump (2) has an outlet valve which, when pressure is applied thereto by reducing agent delivered by the reducing agent pump (2), releases the pump outlet and which automatically closes when there is no application of pressure by reducing agent delivered by the reducing agent pump (2), in particular **in that** the pressure-side outlet valve of the reducing agent pump (2) is formed by the valve (5) in the pressure line (11).

9. Metering system according to any of the preceding claims, **characterised in that** the reducing agent pump (2) has an outlet valve that is formed by a diaphragm.

## Revendications

1. Système de dosage d'agent réducteur pour l'injection d'un agent réducteur dans le courant de gaz d'échappement d'un moteur à combustion interne pour assurer une réduction catalytique sélective, dans lequel le système de dosage est raccordé à un réservoir d'agent réducteur (1), d'où est retiré l'agent réducteur qui est acheminé au moyen d'une pompe d'agent réducteur (2), dans lequel il est ménagé une source d'air comprimé (3) et au moins une buse, qui est raccordée au conduit de pression (11) de la pompe d'agent réducteur (2) et par laquelle l'agent réducteur est injecté dans le courant de gaz d'échappement et atomisé au moyen d'air comprimé, dans lequel la conduite de pression (11) de la pompe d'agent réducteur (2) débouche via un accès (6) à une soupape (5) qui, lors de l'application de pression au moyen de l'agent réducteur acheminé par la pompe d'agent réducteur (2), libère l'accès (6) à la soupape (5) et un canal de trop-plein donnant sur une sortie (7) de la soupape menant à une conduite de dosage (12) vers la buse (4), **caractérisé en ce que** la soupape (5) présente une membrane qui, lors de l'application de pression au moyen de l'agent réducteur acheminé par la pompe d'agent réducteur (2), libère le canal de décharge de l'accès (6) à la sortie (7) de la soupape et le verso de la membrane opposé à l'accès (6) et à la sortie (7) est alimenté en air comprimé de la source d'air comprimé (3) si bien que la pompe d'agent réducteur (2) est soumise à une contrepression définie par l'application de pression à la membrane.

2. Système de dosage selon la revendication 1, **caractérisé en ce que** l'accès (6) et la sortie (7) de la soupape (5) se ferment automatiquement lorsqu'aucune application de pression ne se fait au moyen de l'agent réducteur acheminé par la pompe d'agent réducteur (2).

3. Système de dosage selon la revendication 1 ou la revendication 2, **caractérisé en ce que**, lors d'une dépression appliquée au côté de sortie de la soupape, la membrane ferme la sortie (7) de la soupape (5) ainsi que le canal de trop-plein de la soupape (5).

4. Système de dosage selon l'une quelconque des revendications précédentes, **caractérisé en ce que** l'application de pression au verso de la membrane peut être coupée au moyen d'une soupape de commande si bien que, par coupure de l'application de pression, la pompe d'agent réducteur (2) est soumise à une contrepression réduite et aspire de ce fait plus aisément.

5. Système de dosage selon l'une quelconque des revendications précédentes, **caractérisé en ce que** la source d'air comprimé (3) présente un clapet de réglage de pression (8).

6. Système de dosage selon l'une quelconque des revendications précédentes, **caractérisé en ce que** la pompe d'agent réducteur (2) est une pompe à membrane ou une pompe à piston.

7. Système de dosage selon l'une quelconque des revendications précédentes, **caractérisé en ce que** la soupape (5) forme dans le conduit de pression (11) la soupape de décharge côté pression de la pompe d'agent réducteur (2).

8. Système de dosage selon l'une quelconque des revendications précédentes, **caractérisé en ce que** la pompe d'agent réducteur (2) présente une soupape de décharge qui, lors de l'application de pression au moyen de l'agent réducteur acheminé par la pompe d'agent réducteur (2), libère la décharge de la pompe et se ferme automatiquement lorsqu'il ne se produit pas d'application de pression au moyen de l'agent réducteur acheminé par la pompe d'agent réducteur (2), en particulier **en ce que** la soupape de décharge côté pression de la pompe d'agent réducteur (2) est formée par la soupape (5) dans le conduit de pression (11).

9. Système de dosage selon l'une quelconque des revendications précédentes, **caractérisé en ce que** la pompe d'agent réducteur (2) présente une soupape de décharge qui est formée par une membrane.
